# EUROPEAN PATENT APPLICATION

(11) **EP 1 096 781 A2**
(43) Date of publication of application: **02.05.2001**
(21) Application number: 00309111.3
(22) Date of filing: 17.10.2000
(51) Int. Cl.: H04N 1/32, H04N 1/00

(54) **Automatic document finishing**

(30) Priority: 25.10.1999 US 425930
(71) Applicant: Xerox Corporation, Rochester, New York 14644 (US)
(72) Inventor: Romeika, Matthew A., Rochester, New York 14610 (US); Hamlin, Thomas J., Macedon, New York 14502 (US)
(74) Representative: Rackham, Stephen Neil

(57) **Abstract**

An apparatus and method for finishing a document includes receiving image information generated from a CPU or scanned in with a user interface for applying finishing edits to the digital image and adding an indicia to the received image information representing the identified finished operations. The document contains the received image information and identified operation is then directed to a device operable to be responsive to the indicia to perform the finishing operations. The finishing processes are applied including finishing operations so as to produce a document containing the finishing edits,

## Description

The present invention relates to a finishing apparatus, capable of editing information about a paper, adding the edited information to the paper by using a marking system, and reading the marking information added to the paper to perform a series of operations such as cutting, scoring, and slitting the paper.

Paper cutting devices are widely used at the output of a printer to produce a final product of particular size and shape.

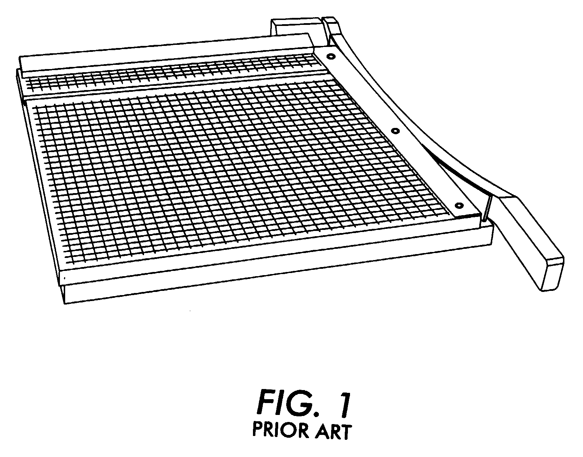

For example, as in Figure 1, a conventional paper cutting device is shown where a piece of paper is manually placed on a platform 120 and lined up according to a particular edge using the markings on the platform. A manually operated blade cutter 110 is used to cut the paper in a horizontal or vertical direction according to the marking on the platform. Such a manual device, requires the operator to physically move the paper in a particular direction so as to exactly size the sheet of paper.

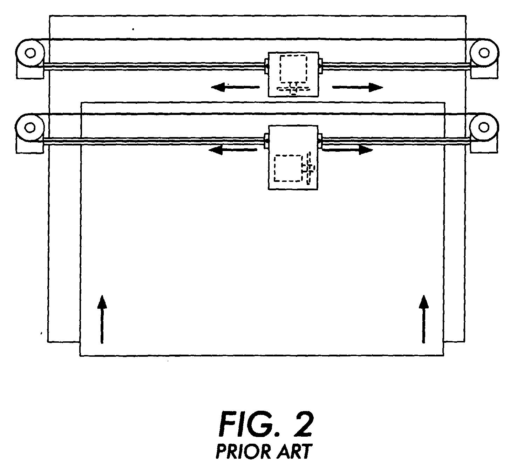

Another such example of a conventional cutting device is shown in Figure 2. There in Figure 2 is shown a horizontal and vertical cutter placed on a platform with movable blades. The cutters move horizontally and vertically to make both horizontal and vertical cuts on the piece of paper as the paper is ejected from the platform at particular points. Such a device requires the operator to manually place the piece of paper on a platform and perform both vertical and horizontal cutting procedures until a desired sheet is sized.

As a result of the above manual operation, the above stand alone cutting devices are time consuming and not practical when used to generate multiple cuts on multiple products. Further, they are unable to produce exact cuts and scoring operations as these devices require manual adjustments which are not always exact. Therefore a document produced by such a procedure will always be not exact to the particular dimensions wanted or if a repetition of the various cutting, scoring and slitting operations is warranted.

To overcome the above mentioned disadvantages the present apparatus is disclosed.

It is therefore an objective of the present invention to provide an automated apparatus which is capable of producing a document from a paper according to the information of the desired document extracted from the paper. The objective of the present invention can be achieved by:

A method of finishing a document including receiving image information generated from a CPU or scanned in with a user interface for applying finishing edits to the digital image, including finishing operations so as to produce a document containing said finishing edits, comprising
adding an indicia to the received image information representing the identified finished operations,
directing the received image information and identified operation to a device operable to be responsive to the indicia.

An apparatus for finishing a document including receiving image information scanned in or stored with a user interface identifying edits to the image including the operations of at least one of cutting and scoring the image, comprising
a device for adding an indicia to the received image information representing identified operations to be performed on a sheet generated with said finished image information;
a device for directing the received image and the identified operations to a device operably responsive to the indicia.

A stand-alone apparatus for finishing paper including receiving image information scanned in or stored with an user interface identifying operations to be performed to the image from a printer, comprising:
a computer device for generating information about a finished paper,
a printer device for receiving the generated information from said computer device and for printing a paper with the generated information thereon, and
a stand-alone device for extracting the information about said finished paper from said printer device wherein said stand-alone device performs a series of operations according to the information extracted from said paper to produce the finished paper.

It is an objective of the present invention to overcome the above-mentioned disadvantages of the prior art by the provision of an improved paper sheet finishing device permitting a packet of several papers to be effectively finished wherein each sheet is generated with a printed code and is placed in the input tray of a finishing system which executes all the necessary operations so that the end product will be precisely registered, scored, cut, trimmed, etc..

Another advantage of the present invention is the lack of need for cabling or programming. This enables the present invention to be a stand alone or in line system.

A further advantage of the present invention is by the use of the printed code on each sheet of paper enabling an automated setup of the individual components without the need to program or connect the present invention to a CPU or printer. This enables the present invention to accept printed sheets from any printer as long as the printed codes are on the page. Further, the use of an auto registration system by present invention enables adjustments and setup of the final finished product.

Many widely different embodiments of the present invention can be construed without departing from the spread and scope of the present invention. It should be understood that the present invention is not limited to the specific embodiment described in the specification, except as defined in the appended claims.

A particular embodiment in accordance with the present invention will now be described with reference to the accompanying drawings; in which:-
Figure 1 is a schematic diagram of a conventional cutting device;
Figure 2 is a schematic diagram of a conventional cutting device;
Figure 3 is a flowchart showing the finishing device in the present invention in conjunction with the printing process;
Figure 4 is a side view of the present invention;
Figure 5 is a horizontal view of the present invention;
Figure 6 is a flowchart of the series of steps required to produce a document according to the present invention; and
Figure 7 is a view showing the printed results of a document according to the present invention.
Figure 8 is another embodiment of the present invention.

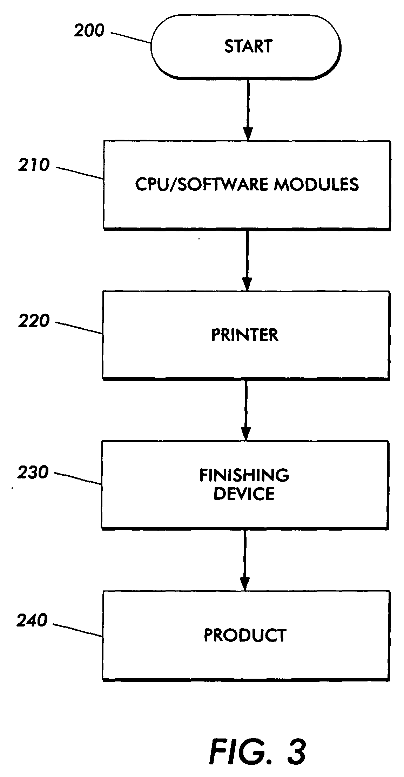

Figure 3 shows a flowchart of a finishing apparatus according to the present invention.

Initially, at step 200, a document is scanned in using a scanning device (not shown) or created in the CPU so as to generate a digitized image of the document. Then at step 210, various software and CPU modules are used to develop an edited document of the scanned or a digitized document. The edited document could for example, have a variety of backgrounds and templates that could require several different cutting, slitting and scoring designations to be added. One way this addition step could be performed is by editing a series of images or templates on a screen (not shown) and by adding in the appropriate operation (cut, slit, score) lines and markings. At step 220, the document is sent to a printer so as to generate a printed image according to the edited features of step 210. At step 230, the output of the printer is placed into the input tray of a finishing device so as to produce the end product at step 240.

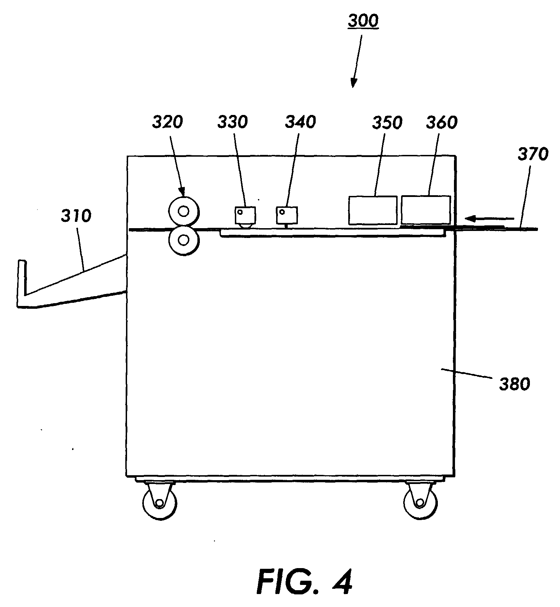

Figure 4 shows the parts of a finishing device 300 according to a first embodiment of the present invention.

A paper with information markings thereon is sent to the input tray 370. Initially, the information markings on the paper are read by a reading unit 360. The reading unit 360 scans and detects the printed markings on the paper wherever they are in the paper. The markings would contain the information necessary to register, score, cut and slit the paper in precise interval locations. An example, of these type of markings are bar codes, crop marks, registration, or other similar markings. The markings may be printed within the document to be produced or printed outside the document to be produced. The markings may also be visible or invisible to the naked eye. Generally, the markings will be located on the lead edge of the printed sheet but the markings could be spread throughout the document.

Once the reading unit 360 has read and extracted the printed code or marks, the information is inputted to a registering unit 350 to enable the automated set up before the cutting, scoring, and slitting procedures. Without such marks the paper would have to be manually set up or adjusted in the finishing device by the user.

The registering unit 350 detects the image area of the print and squares and aligns the paper via this image area instead of the traditional means of aligning via the paper's edge. This is done so that the other finishing components can function properly. This is a critical step as indicated earlier because not only can it be time consuming to the operator if it where manually done but the manner which the paper is aligned is necessary to perform precise cutting, scoring and slitting operations. If the image on the paper or the paper itself was misaligned even slightly, the following finishing procedures would not be performed correctly making the finished product very different from what the user desired. When a sheet(s) of paper is placed in the input tray, the unit will detect the image area on the sheet by detecting the markings on the paper and slightly adjust or slightly rotate the paper so the image area on the paper will be properly aligned and squared prior to entering the other operations. If the image is not 100% accurately aligned or square, regardless if the paper is square, the end result will be an incorrectly finished product.

The next component is the scoring unit 340. This unit will be given the exact position information by the reader unit to apply the score to the paper so that the user can easily fold the paper along the scoring line. The paper transporting system which is composed of rollers in the finishing device will index or move the paper to the location where the scoring unit is located. The unit 340 will automatically be activated upon detection of the paper in the appropriate location and apply the designated score. Again, the score enables the end product to be cleanly folded in the manner which the score is applied, without cracking or tearing the paper. An example of such a scoring device is the "PFI Creaser".

The paper will then continue to be transported to the fourth main component, the cutting unit 330. The unit will also be directed according to the information received via the reading unit 360. The cutting unit 330 will be given information as to the exact location to cut or shear the paper. The unit can create any number of cuts up to 1/16" wide. An example of this type of cutter is the Duplo Docu Cutter 535.

The next component is the slitter unit 320. The slitter unit consists of 4 individual slitter blade modules which allow the paper to pass through the slitter unit hence cutting the paper. Each slitter model will be moved via an electric motor that will position itself as directed by the information received via the reading unit 360. Also, if necessary according to information received from the reading unit 360, the slitters will be able to be disengaged. This will allow the slitters to remain in the paper path but will not cut or damage the paper in any manner. One method of disengaging the blades is to rotate the top cutting portion of each unit up so that the paper will simply pass through without touching the blades. An example of a well known slitter can be found in the Duplo 535 "Docu Cutter".

The paper product is finally sent to the output tray 310 or catch base. Since the finished products will have various finished document sizes, the output tray will be compartmentalized to sort and neatly stack each of the end products. The output tray will consist of a variable number of attachable sortable boxes for the collection and organization of various size outputs.

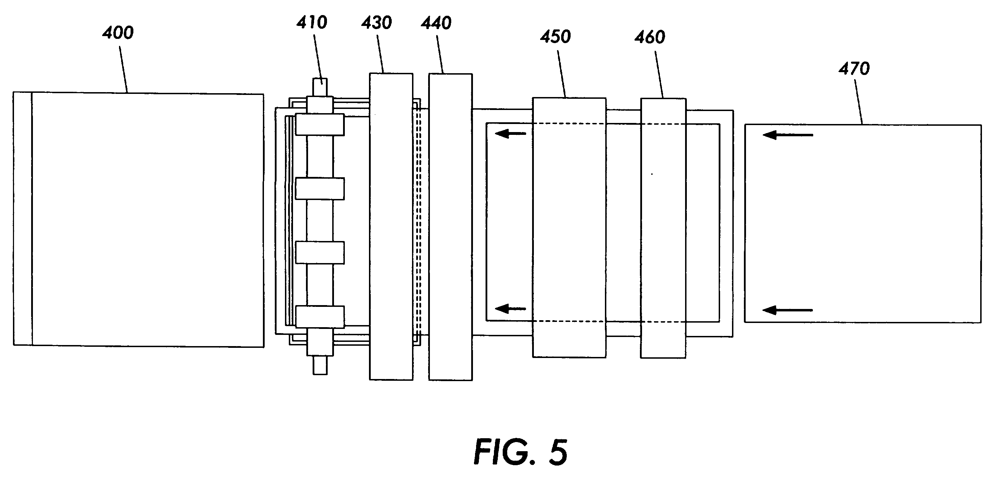

Figure 5 details a block diagram showing a cross sectional view of the paper flow. Initially the paper is inputted by the input tray 470; then the paper is sent to the reader unit 460, after which the paper is sent to the registration unit 450, then the paper is sent onto the scoring unit 440, after which the paper is sent to the cutter unit 430, next onto the slitter unit 410, and finally the paper is outputted to the output tray 400. Also, the reader unit and registration unit maybe an integral unit.

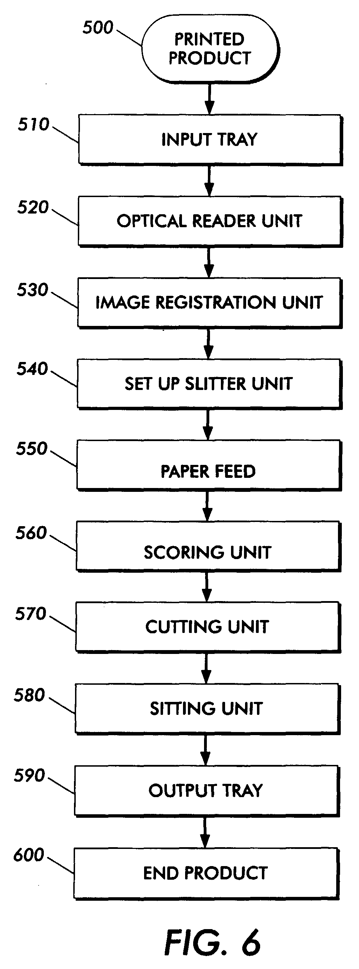

Figure 6 is a block diagram showing the process of finishing a printed sheet and creating the end product. Initially, at step 510 the paper is placed into the input tray where it is scanned by the reader for marks and codes. At step 520 the reader will actively scan the print for markings. Once the markings are detected it will then instruct all necessary finishing units of how to set up to execute the operations. At step 530 the image registration unit will work with the reader to register the paper via the image area so its path will both be accurate and straight throughout the rest of the device. Registration marks can be found on the lead and trail edge of the paper lineup, or only on the lead edge.

Next at step 540 the slitter unit receives the necessary information for the appropriate slitter materials. This will take a few seconds so it should be done first. Finally, once the paper has been registered correctly and the slitters are set up, the paper will then begin to feed.

Next at step 560 the paper will first index through the scoring unit. If the reader has detected the appropriate codes and markings on the paper it will apply a score on the paper at the predetermined locations. If it does not require a score, the paper will pass untouched through the scoring unit.

After the scoring, the paper will be indexed through the cutting unit at step 570. This unit will also receive information from the reading unit as to the correct location to shear the paper. Generally speaking, the number of cuts that can be applied to the paper can range from 0 to one hundred or more as it passes through such a unit.

After passing through the cutting unit, the next step is to pass through the slitting unit 580. This unit will all ready be set up to the correct positions by the information received from the reading unit at the beginning of the process. The slitting unit consists of four individual slitter modules that can be placed at almost any location along the plane perpendicular to the feed direction. This means that between zero and 4 cuts can be made by this unit. Further, if no such cuts are in fact needed, the modules can be disengaged so that the paper will be passed through the slitter unit without any cuts.

Next, the "finished" product will exit the device and slide into the output tray. Generally, this is a single flat tray or can be a series of organizational trays attached to assist in the stacking and organization of the finished outputs. Finally this finished product is completed and ready to be delivered to the customer.

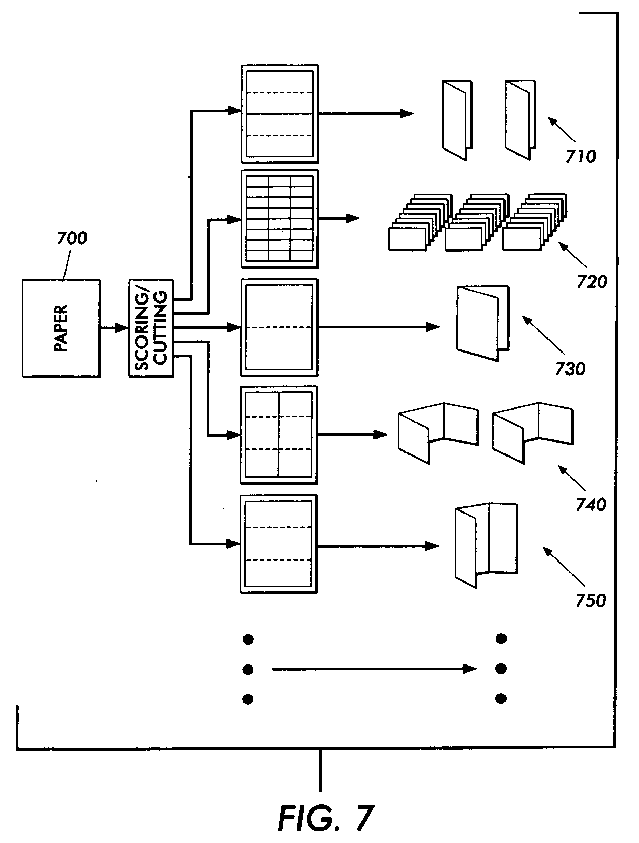

Figure 7 shows several examples of how a single blank sheet of paper 700 scored, cut and slitted according the coded information extracted from the reading unit 360. By detecting the coded information continued within different products, a variety of finishing operations can be easily generated and executed. For example, 2 greeting cards 710, 24 business cards 720, 1 large album 730, 2 small trifold albums 740, 1 trifold brochure 750. All of these products can be finished from a single blank 11x17 sheet of paper 700.

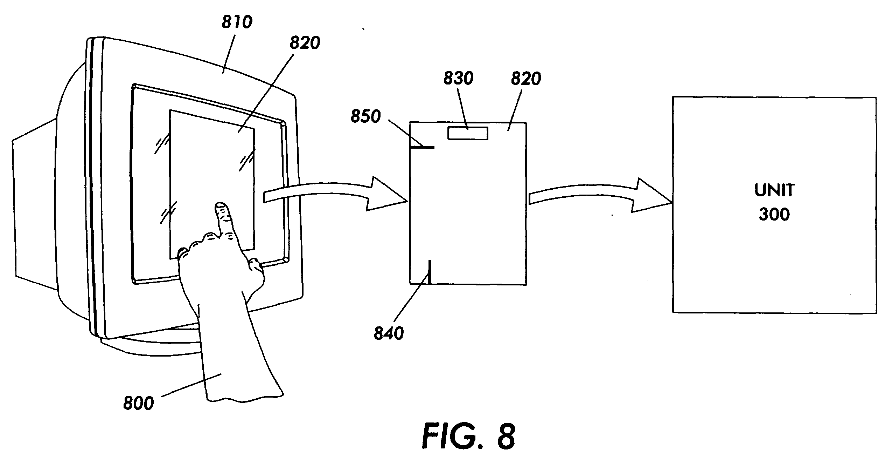

Figure 8 diagram shows an embodiment of the present invention where a user 800 applies the necessary finishing edits to a digital image 820 on a computer terminal 810. The edits and marks 830, 850 are then applied to the printed sheet of paper 820 in the appropriate locations (for example 850 and 840). These edit marks are used by the optical reader of the present invention to perform a series of cutting and scoring operations. Figure 8 further details the manner in which the software applies the edit marks to the digital image. The digital image is then printed with the edits and marks. Finally, the printed sheet is placed in the input tray of the present invention 300 which will detect the edits marks and accurately finish it accordingly. The present invention may be in-line apparatus or a stand-alone apparatus depending on the configuration desired.

## Claims

1. A method of finishing a document including receiving image information generated from a CPU or scanned in with a user interface for applying finishing edits to the digital image, including finishing operations so as to produce a document containing said finishing edits,
characterised in that indicia and added to the received image information representing the identified finishing operations, and in that the received image information and identified operation are directed to a device operable to be responsive to the indicia to perform the finishing operation.

2. A method according to claim 1, wherein the indicia includes information related to finishing operations of at least one of the following operations, registering, cutting, slitting and scoring operations.

3. A method according to claim 1 or 2, wherein the device responsive to the indicia comprises:
registering the received finished image information according to information from the indicia, and at least performing one of an operation of cutting, scoring and programming operations of said received finished image information according to said indicia information.

4. A method according to any one of the preceding claims, wherein the indicia includes information visible and non-visible to a user located on said paper.

5. An apparatus for finishing a document including receiving image information scanned in or stored with a user interface identifying edits to the image including the operations of at least one of cutting and scoring the image, comprising
a device for adding an indicia to the received image information representing identified operations to be performed on a sheet generated with said finished image information;
a device for directing the received image and the identified operations to a device operably responsive to the indicia.

6. An apparatus according to claim 5, wherein said identified operations at least further comprise one of the following operations:
registering the paper according to the received indicia,
scoring the paper according to the received indicia,
cutting the paper according to the received indicia, and
programming a series of operations on the paper according to the received indicia.

7. An apparatus of claim 5 or 6, wherein the indicia comprises:
information about a series of operations necessary for finishing the document.

8. A method for perfecting a document including receiving image information scanned or stored with an user interface identifying edits to the image including at least one of cutting and scoring the image, comprising:
extracting an indicia from said sheet,
aligning said sheet according to the said indicia,
generating a series of operations so as to produce a document from the indicia on said paper.

9. A method according to claim 8, comprising:
the extracted indicia being of different sizes and shapes.

10. The method of claim 8 or 9, wherein said extracted indicia being either visible or invisible on said sheet.
